# EUROPEAN PATENT APPLICATION

(11) **EP 4 625 203 A1**
(43) Date of publication of application: **01.10.2025**
(21) Application number: 25164086.8
(22) Date of filing: 17.03.2025
(51) Int. Cl.: G06F 16/3329, G06F 16/3332

(54) **CHUNK SYNTHESIS FOR RETRIEVAL AUGMENTED GENERATION ASSISTANTS**

(30) Priority: 29.03.2024 US 202418621728
(71) Applicant: Microsoft Technology Licensing, LLC, Redmond, WA 98052 (US)
(72) Inventor: HURST, Matthew Francis, Redmond, 98052-6399 (US); ENDRES, Kevin John, Redmond, 98052-6399 (US)
(74) Representative: CMS Cameron McKenna Nabarro Olswang LLP

(57) **Abstract**

A query answering system may access a collection of data sources to populate an index. A query answering system derives content from a collection of data sources to create synthetic chunks that are each representative of a portion of content from one or more of the data sources. A query answering system populates the index with the synthetic chunks. A query answering system identifies a subset of the synthetic chunks as relevant to a user query, generates a large language model (LLM) prompt that includes the subset of the synthetic chunks from the index and the user query, provides the LLM prompt to an LLM., and generates a response to the user query based on output of the LLM.

## Description

### Background

Retrieval augmented generation (RAG) assistants are sometimes employed as an intermediary between a large language model (LLM) and an end user or compute system that sends queries to the LLM. The primary function of the RAG assistant is to translate a received query into an LLM prompt that includes relevant additional contextual information that can help the LLM to better answer the query. This additional contextual information can be helpful in a number of scenarios, such as when the user query relates to information that is external to the training dataset of the LLM or information that is incompletely described within the LLM training dataset.

RAG assistants leverage an index populated with textual objects and a prompt assembly system. In response to a user turn in a conversation, the RAG assistant sends a query to the index and retrieves a result set. The RAG assistant uses some or all of the result set to populate a suitably crafted prompt which it then sends to an LLM to generate a response. In other words, the RAG assistant inserts some subset of content retrieved from the index into the prompt that it sends to the LLM.

### Summary

In some aspects, the techniques described herein relate to a method including: deriving content from a collection of data sources to create synthetic chunks, each synthetic chunk representative of a portion of content from a corresponding one of the data sources; populating an index with the synthetic chunks; identifying a subset of the synthetic chunks as relevant to a user query; generating a large language model (LLM) prompt that includes the subset of the synthetic chunks from the index and the user query; providing the LLM prompt to an LLM; and generating a response to the user query based on output of the LLM.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates an example computing environment for generating a large language model (LLM) prompt that includes contextual data mined from an index populated with synthetic chunks derived according to the herein disclosed technology.
FIG. 2 illustrates an example computing environment that constructs LLM prompts that include synthetic data chunks mined from and index and identified as relevant to a query.
FIG. 3 illustrates an example computing environment for generating an LLM prompt for input to an LLM and an output of the LLM generated based on the LLM prompt.
FIG. 4 depicts an example method for generating an LLM prompt includes synthetic chunks derived from data sources.
FIG. 5 depicts an example method for populating an index that serves as a data source for contextual data added to an LLM prompt.
FIG. 6 illustrates an example computing device for use in implementing the described technology.

### Detailed Descriptions

Because RAG-assistant-generated prompts are populated with data from an index, a large language model (LLM) can base responses to RAG-assistant-generated prompts not only on the verbatim content of the source documents in the index, but also provide annotations (e.g., references) to the data in the index, thereby providing the consumer of the response with sufficient information to verify the correctness of the response with respect to the original content. Due to the limits imposed on the prompt size by LLMs, as well as the behavior of LLMs given the content of the prompt, the total size of the content from the index inserted into the prompt is limited. Consequently, in conventional content generation systems, documents ingested into the index are divided into portions (e.g., "chunked"). These portions, by design, form either a partitioning of the content with no overlaps or include various forms of overlapping content.

However, conventional indexing of content for use by RAG assistants for generation of LLM prompts is inadequate for a number of reasons. The RAG assistant is tasked with identifying a collection of data portions from the index that collectively provide an LLM with sufficient contextual information to enable the LLM to answer a query that relates to the data portions. In some instances, the LLM may be unable to answer a query unless provided with many different data portions from the index that collectively exceeds an input length limit of the LLM. For example, the query asks for a list of birth dates and place of birth information for 30 actors in a movie trilogy. However, the data necessary to answer this query is in 30 separately indexed portions of biographic articles for each of the 30 actors and the combined size of the 30 portions of source content is greater than a query data limit imposed by the LLM.

In some instances, a RAG assistant cannot construct, from conventionally-indexed content, a query to retrieve the required data portions to generate an appropriate LLM prompt. For example, a query states, "why did C happen?' and information regarding events in a causal chain A-B-C (A caused B, which caused C) are located in different source portions. However, no query can retrieve the complete information in the causal chain without first knowing the causal chain.

In some instances, although an answer could be inferred from the conventionally-indexed content using a set of inferences, an LLM is incapable of determining the answer from a RAG-assistant-generated prompt because no data portions from conventionally-indexed content exist that contain the answer. For example, a query asks what is the next train a user can take that departs from station A toward station B in city C if the user arrives at station A at 6:30 a.m. local time on a weekday. The RAG assistant accesses a data portion that states that "on weekdays, trains depart station A toward station B every 20 minutes starting at 5:00 a.m., the last train departing at 10:00 p.m." In this example, the answer to the query can be inferred from the data portion. Specifically, knowing that the train departs every twenty minutes, a person reading the data portion would know that a train will depart at every hour, at every twenty minutes past the hour, and at every forty minutes past the hour. Therefore, because the user arrives between twenty and forty minutes past a certain hour (6:00), the next available train will depart at forty minutes past the hour (6:40 p.m.). However, in this example, the LLM may be incapable of performing this inference process even given the data portion as part of its prompt because the data portion does not explicitly state that "a train departs station A toward station B at 6:40 p.m."

The technology disclosed herein addresses these inadequacies of conventional indexing of content by providing for the construction of synthetic chunks that can be used by RAG assistants to generate LLM prompts. Each LLM prompt generated by a RAG assistant includes an LLM query (e.g., a written question submitted by a user) and contextual information, selected by the RAG assistant, that gives the LLM additional context helpful in answering the LLM query. The contextual information includes at least one "synthetic chunk" (defined below) and may include other data portions (e.g., non-synthetic data chunks) pulled from an index accessible to the RAG assistant. As used herein, the term "data portion" is used to describe a continuous portion of a source document. For example, a data portion is a paragraph, page, or chapter of an article or book. In contrast to this, a "synthetic chunk" refers to a chunk of data that is derived from one or more source documents and is not merely an excerpt of a source document. In the implementations disclosed herein, an index is populated with data portions extracted from original source content. Synthetic chunks are then derived from one or more of the data portions. Due to limits on LLM prompt length and other reasons discussed herein, the inclusion of a synthetic chunk in an LLM prompt (e.g., in lieu of or in addition to one or more data portions) may enhance the LLM's ability to answer a query with relevant information.

Deriving a synthetic chunk can include stylistic changes, formatting changes, and/or content changes to the original source content. For example, deriving the data for the synthetic chunk from the original source content can include one or more of copying, extracting, compiling, translating, expanding, reducing, summarizing, tabulating, retabulating, stylistically changing, identifying, formatting, reformatting, determining via a mathematical algorithm, predicting by one or more machine learning models, inferring based on one or more logical rules, or otherwise deriving data from one or more data portions of source content. The synthetic chunks can be stored in the index for access by the RAG assistant. As used herein, source content can include one or more of text data, image data, video data, audio data, or other types of data from which the synthetic chunk can be generated.

In some implementations of the disclosed technology, an index is populated with original data portions (sometimes referred to as "chunks") extracted from a source content in addition to one or more synthetic chunks generated based on the data portions. The synthetic chunks are indexed along with the original data portions for access by a RAG assistant. Accordingly, the technology disclosed herein augments the portioned source data of an index with additional synthetic chunks that improve the quality of prompts generated by the RAG assistant and, consequently, responses generated by the LLM responsive to those prompts.

In some instances, one or more synthetic chunks generated according to the technology disclosed herein may include data derived from a set of source data portions that have a combined data size that is larger than a combined size of the one or more synthetic chunks. Accordingly, a size of contextual information within LLM prompts, and accordingly, the overall size of the LLM prompts that include the contextual information, generated using the synthetic chunk(s) can be reduced in comparison to sizes of LLM prompts of identical purpose that are generated using contextual information that includes only conventionally-indexed content. In some scenarios, this reduction in LLM prompt size can lower a bandwidth usage of a RAG assistant compared to bandwidth usage of the RAG assistant that results from LLM prompt generation based on conventionally-indexed content (e.g., in scenarios where the RAG assistant determines that a larger number of data portions with significant collective size are needed to provide the LLM with sufficient contextual information to answer a given query).

In some instances, one or more synthetic chunks generated according to the technology disclosed herein can include information inferred from, but not explicitly present in, one or more source data portions. In this example, the RAG assistant can craft an LLM prompt using synthetic chunk(s) that include such inferred data, whereas the conventionally generated prompt would not include chunks that include such inferred data. Accordingly, prompts generated using the technology described herein can include inferred information that would not be available to generate an LLM prompt from conventionally indexed information. Consequently, the LLM's answer to prompts generated based on indexes generated using the disclosed indexing technology are also improved over LLM answers to prompts generated based on conventionally-indexed content.

Further, in some implementations, the synthetic chunks generated according to the technology described herein include annotations with references to the relevant portions of the source content to provide a complete chain of evidence for users of the RAG assistant and/or the LLM. In some instances, the annotation within a synthetic chunk can indicate a process (e.g. a copying, a consolidation, a language translation, a summarization, a tabulation, a mathematical operation, a regeneration of content in a different style, or other process) used to generate the synthetic chunk, a tool (e.g., a software, an application, etc.) used to generate the synthetic chunk, or other information explaining how the synthetic chunk are generated from the relevant portions of the source content.

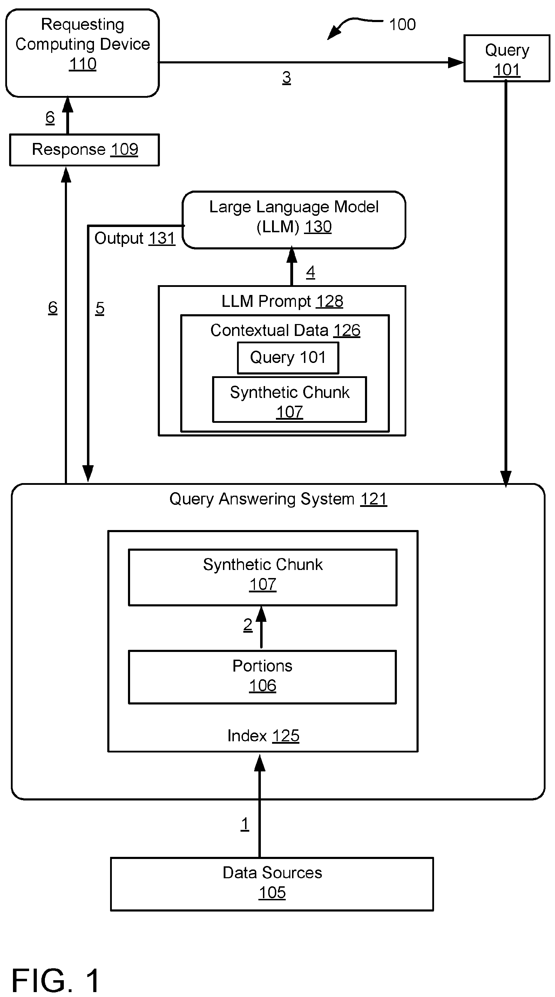

FIG. 1 illustrates an example computing environment for generating a large language model (LLM) prompt 128 that includes contextual data 126 mined from an index populated with synthetic chunks (e.g., a synthetic chunk 107) generated according to the herein disclosed technology. The example computing environment 100 includes a query answering system 121, a requesting computing device 110, and an LLM 130 that communicate with each other via a network (e.g., the Internet).

In some implementations, the requesting computing device 110 is a user computing device. For example, a user operates the user computing device and inputs the query 101 via a user interface of the user computing device. The user computing device transmits the query 101 to the query answering system 121 and receives a response 109 to the query 101 from the query answering system 121 responsive to transmitting the query 101. The user computing device displays the response 109 to the user via the user interface. In other implementations, the requesting computing device 110 is a cloud-based device (e.g., server) or an edge computing device that initiates the query 101 on behalf of a computer process, such as a computer process executed on a user device or by a cloud-based application.

The query 101 is a natural language query that includes one or more sentences, phrases, or other combinations of words, characters, or other text-based symbols. By example, the query could be: "What was the Brazilian President's speech yesterday about?"

The query answering system 121 is an example RAG assistant that provides the LLM 130 with additional contextual information to help answer each query. In response to receiving the query 101, the query answering system 121 generates the LLM prompt 128 provides the LLM prompt 128 to the LLM 130. The query answering system 121 generates a response 109 based on an output 131 of the LLM 130. The LLM prompt 128 includes contextual information relevant to the query 101 that is extracted from an index 125 that is populated from data sources 105 using the herein-disclosed technology.

In various implementations, the data sources 105 include one or more of website data, news articles, statistical data, dictionary data, encyclopedic data, blog data, or other text data.

In some implementations, the index 125 is populated by the query answering system 121. In other implementations, population of the index 125 is performed by a third-party system distinct from the query answering system 121. Populating the index 125, in some implementations, involves dividing (e.g., chunking) one or more of the data sources 105 into portions 106. In some implementations, the portions 106 comprise text that is extracted (e.g., verbatim) from a data source, either with or without overlap of data between the different portions. In one implementation, the portions 106 are of predefined consistent size. For example, a data source having a size of ten units is divided into five portions, each of the five portions having a size of two units. In other implementations, the portions 106 are of variable size. The query answering system 121 generates, from the portions 106, one or more synthetic chunks (e.g., a synthetic chunk 107) that include data derived from one or more of the portions 106 of the data sources 105. In some implementations, a synthetic chunk 107 includes one or more annotations that reference the portions 106 that were used to generate the synthetic chunk 107.

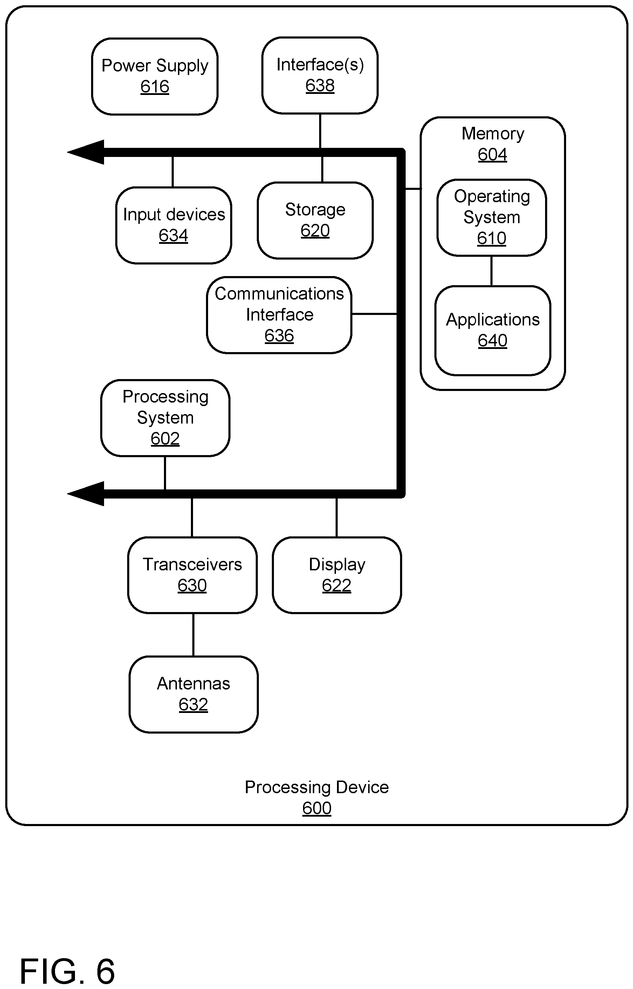

In various implementations, the query answering system 121 performs various types of operations to generate the synthetic chunk 107. For example, the operations could include assembly of a table, a rewrite of a table into paragraph, word, or sentence form, an extension of a table, a reformulation of a style of content, a summarization of a table, a summarization of content, a translation of content, or other operation with respect to one or more of the portions 106 of content. Further details and examples of operations for generating synthetic chunks (e.g., synthetic chunk 107) from portions 106 are described in FIG. 6.

In general, the LLM prompt 128 can be understood as including both an instruction to the LLM 130 to generate an output (e.g., the query 101 or modified version of it) along with contextual data 126 to help the LLM 130 carry out the instruction. The contextual data 126 includes portions 106 or synthetic chunks (e.g., the synthetic chunk 107) from the index 125. In some implementations, the LLM prompt 128 includes a rewritten version of the query 101. For example, the query 101 is one long sentence and the LLM prompt 128 includes the query 101 written in four shorter sentences that the LLM 130 is, for various reasons, more likely to interpret correctly. In various implementations, the output 131 of the LLM 130 includes portions of the contextual data 126 and/or data generated based on the contextual data 126 included in the LLM prompt 128.

Based on the output 131 received from the LLM 130, the query answering system 121 generates a response 109 to the query 101 requesting computing device and transmits the response to the requesting computing device 110.

The LLM 130 is trained to process and respond to natural language queries and is, in one implementation, a publicly-available third-party model that processes natural language inputs in a sequential manner to generate corresponding textual outputs. Examples of LLMs include transformer-based models (e.g., a generative pre-trained transformer (GPT) model, an Open Pretrained Transformer (OPT) model, or Bioscience Large Open-science Open-access Multilingual (BLOOM) model), as well as seq2seq models, long short-term memory networks (LSTM), and recurrent neural networks (RNNs).

Including the contextual data 126 (e.g., the portions 106 and/or synthetic chunks retrieved from the index 125) within the LLM prompt 128 increases a knowledge base of the LLM 130 and allows the LLM 130 to draw inferences from the contextual data 126 as well as from its respective training dataset. The LLM 130 adds this contextual data 126 to its context window (e.g., a short-term memory of the model) and responds to the LLM prompt 128 using its own built-in knowledge plus the context data included in the LLM prompt 128. The output 131 includes a text output that is generated, at least in part, based on the synthetic chunk(s) included in the context data of the LLM prompt 128.

FIG. 1 also depicts a series of example operations 1-6 performed by the query answering system 121. In a first operation (e.g., arrows indicated with numeral "1"), the query answering system 121 receives or otherwise accesses data sources 105 and uses those data sources 105 to populate the index 125. Populating the index 125 includes generating portions 106 from the data sources 105 for storing in the index 125. In a second operation (e.g., arrow indicated with numeral "2"), the query answering system 121, generates, based on the portions 106, one or more synthetic chunks (e.g., synthetic chunk 107) for storing in the index 125. Synthetic chunks (e.g., synthetic chunk107) include data derived from one or more portions (e.g., portions 106). The query answering system 121 stores the portions 106 and synthetic chunks (e.g., synthetic chunk107) in the index 125. As indicated in the example of FIG. 1, a third operation (e.g., arrows indicated with numeral "3") involves the query answering system 121 receiving a query 101 from the requesting computing device 110. In the example depicted in FIG. 1, a fourth operation (e.g., arrows indicated with numeral "4") involves generating, by the query answering system 121, the LLM prompt 128 based on the query 101 that includes the contextual data 126, including the synthetic chunk 107, identified as relevant to the query 101. The LLM prompt 128 is provided to the LLM 130. Although the contextual data 126 of the LLM prompt 128 is shown in FIG. 1 as including the synthetic chunk 107, the contextual data 126 may, in other use instances, include multiple synthetic chunks identified as relevant to the query 101 and/or a combination of synthetic chunks and original text excerpts (e.g., the portions 106). A fifth operation (e.g., arrow indicated with numeral "5") involves the query answering system 121 receiving or otherwise accessing (e.g., retrieving) an output 131 of the LLM 130 that the LLM 130 generates based on the LLM prompt 128 as an input. A sixth operation (e.g., arrows indicated with numeral "6") involves generating, based on the output 131, a response 109 and transmitting the response 109 to the requesting computing device 110 responsive to the query 101. In some implementations, the response 109 includes information that is extracted from the synthetic chunk 107 or otherwise generated by the LLM 130 based on the synthetic chunk 107.

In some implementations, generating the response 109 involves communicating the output 131, verbatim, to the requesting computing device 110. In some implementations, generating the response 109 involves reformatting the output 131 and transmitting the output 131, reformatted, to the requesting computing device 110.

The example operations 1-6 depicted in FIG. 1 can, in some implementations, be performed in another order other than the example order depicted in FIG. 1. For example, the query answering system 121, in some implementations, can perform example operations 1-2 to access the data sources 105 and populate the index 125 after performing example operation 3 of receiving/accessing the query 101 and before performing example operation 4 of generating the LLM prompt 128. In the example depicted in FIG. 1, the LLM 130 is shown separate from the query answering system 121 to indicate that the LLM 130 may be hosted by different compute device(s) than the query answering system 121 and/or operated by a different controlling entity (e.g., the LLM is a publicly-available third-party model). In other implementations, the query answering system 121 is hosted by a same set of computing device(s) that host the LLM 130 and the above-described LLM operations are performed without transmitting the LLM prompt 128 to a third-party system.

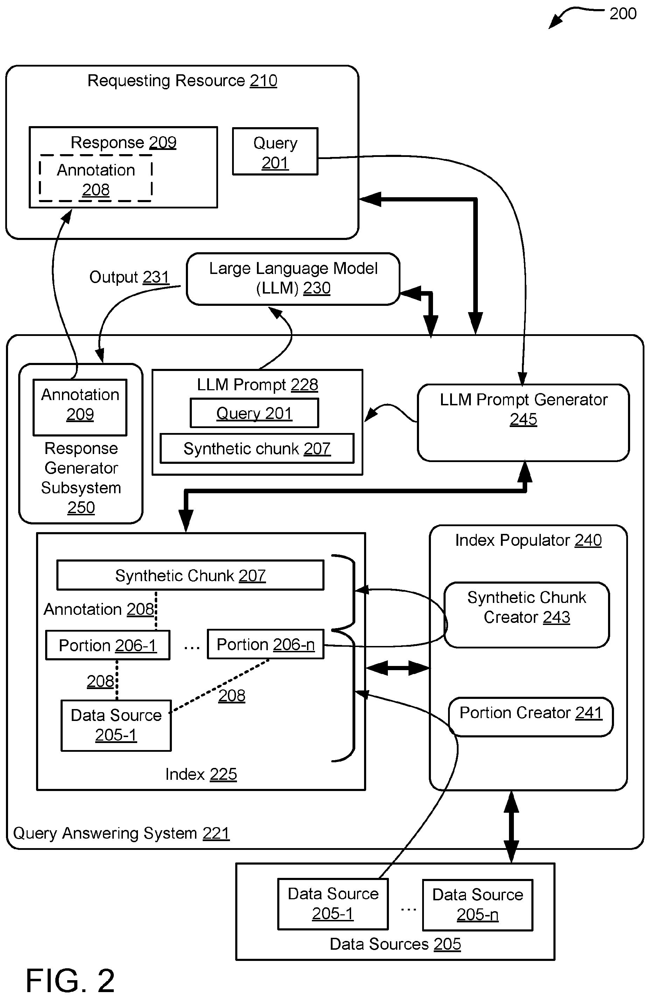

FIG. 2 illustrates an example computing environment that constructs LLM prompts (e.g., an LLM prompt 228) that include synthetic data chunks (e.g., a synthetic chunk 207) mined from an index 225 and identified as relevant to a query 201(e.g., a natural language query). The computing environment 200 includes a query answering system 221, a requesting computing device 210 and an LLM 230 that communicate over a network.

The query answering system 221 is a computing system that provides a query answering service to the requesting computing device 210. The query answering system 221 includes an index populator 240, a LLM prompt generator 245, and a response generator subsystem 250. The index populator 240 populates an index 225 from data sources 205. In FIG. 2, the index populator 240 is shown to include a portion creator 241 and a synthetic chunk creator 243. The portion creator 241 divides one or more data sources (e.g., *n* data sources 205 including data source 205-1 ... data source 205-n) into portions 206 (e.g., *n* portions 206 including portion 206-1 ... portion 206-n, where portion 206-n is the nth portion). The data sources 205 can include one or more of website data, news articles, statistical data, dictionary data, encyclopedic data, blog data, or other text data. In some implementations, the portions 206 each include sequential content extracted from a data source. For example, each portion is of a predefined size. In various implementations, the portions 206 may include discrete (non-overlapping) segments of the sequential content and/or segments of the sequential content that partially overlap one another. In some implementations, the portions 206 each include an annotation indicating the corresponding one of the data sources 205 that provided the source material for the portion.

The index populator 240 uses the synthetic chunk creator 243 to perform various operations on the portions 206 and thereby derive one or more synthetic chunks (e.g., synthetic chunk 207). For example, the operations could include one or more of an assembly of a table, a rewrite of a table into paragraph, word, or sentence form, an extension of a table, a reformulation of a style of content, a summarization of a table, a summarization of content, a translation of content, or other operation with respect to one or more portions of content. Further details and examples of operations for generating synthetic chunks from portions 206 are described in FIG. 6.

In the implementation of FIG. 2, the index populator 240 includes an annotation (e.g., an annotation 208) within each of the portions 206. The annotation 208 for a given portion is a citation indicating where in the original data source (e.g., the data source 205-1) the portion was extracted from. For example, when dividing a data source (e.g., data source 205-1) into a set of n portions (e.g., portion 206-1 ... 206-n), the portion creator 241 generates an annotation 208 for each of the n portions 206 that associates the respective portion with the data source 205-1 from which the portion 206 was generated. When generating the synthetic chunk 207 from a select subset of the portions 206, the index populator 240 propagates the annotations 208 in the select subset of the portions 206 to the synthetic chunk 207. For example, the synthetic chunk creator 243 generates synthetic chunk 207 based on two of the portions 206 and propagates the annotations 208 included into those portions 206 to the synthetic chunk 207 such that it becomes possible for a user to fact-check the synthetic chunk 207 using the annotations 208 to identify the corresponding original source material. The portions 206 and synthetic chunks can be stored in a data storage unit or other memory accessible to the query answering system 221.

In FIG. 2, the LLM prompt generator 245 is shown receiving the query 201 from the requesting computing device 210 and, in response, generating a LLM prompt 228. In some implementations, the LLM prompt generator 245 is a retrieval augmented generation ("RAG") assistant. The LLM prompt 228 includes the query 201 (or a modified query generated from the query 201) along with contextual information from the index 225 that is identified as relevant to the query 201 (or relevant to the modified query). Specifically, the contextual information includes a selection of synthetic chunks (e.g., the synthetic chunk 207 and/or other like-created chunks) and/or a selection of the portions 206 residing in the index 225. The LLM prompt generator 245 provides the LLM prompt 228 to the LLM 230 as input.

In certain implementations, the synthetic chunk creator 243 generates, for each synthetic chunk 207, a confidence value that describes a degree of confidence that the information in the synthetic chunk 207 is accurately derived from the source portion(s) 206. In one implementation, the confidence value measures the accuracy of a specific synthesizing process for deriving a synthetic chunk 207 from the source portion(s) 206. For example, if the process used to generate the synthetic chunk 207 is a process to fill in implicit information in a timetable, the confidence value can be determined by experimentally determining a metric representing a confidence that the inferred information is correct. This confidence value can then be associated with each synthetic chunk that is generated by that same process. In other implementations where the synthetic chunk 207 is generated by a machine learning model that produces probabilistic results, the resulting probability associated with the synthetic chunk 207 is assigned to the synthetic chunk 207 as the confidence value. For example, the machine learning model is a model trained to summarize documents, parse documents for tabular data and re-write the tabular data in the form, or perform language translation - all of which may rely on probabilistic selection to render a final result.

In some cases, certain types of synthetic chunks (e.g., the synthetic chunk 107) are generated by publicly-available machine learning models without additional specialized training. For example, an off-the-shelf language translation model may be used to render a translation of a data portion (e.g., one example of a synthetic chunk). In other cases, machine learning models can be specially-purposed to generate synthetic data chunks, such as by supervised training that includes examples of source content and synthetic chunks derived from the source content (e.g., human-derived synthetic chunks) that are of a type that the model is being trained to create. For example, a machine learning model can be trained on a dataset that includes pairs of documents, with each document pair including (1) an original version of the document including mathematical equations; and (2) a modified version of the document that includes the equations in written form. From this dataset, the model can be trained to receive documents of the former type as input and generate the latter type of document as output.

In some implementations, the LLM prompt generator 245 selects one or more of the synthetic chunks (e.g., synthetic chunk 207) to include in the LLM prompt 228 based at least in part on the confidence values associated with the one or more synthetic chunks (e.g., synthetic chunk 207). If, for example, the synthetic chunk 207 is identified as relevant to the query 201, the likelihood that the LLM prompt 228 will include the synthetic chunk 207 may increase and decrease in proportion to the confidence value associated with the synthetic chunk 207. In some implementations, the LLM prompt generator 245 discards synthetic chunks with corresponding confidence values below a set threshold.

In some implementations, the LLM prompt generator 245 inserts or otherwise includes, in the LLM prompt 228, annotations 208 that are associated with one or more synthetic chunks (e.g., synthetic chunk 207) or portions 206 that are in the LLM prompt 228.

In some implementations, the response generator subsystem 250 receives or otherwise accesses an output 231 of the LLM 230 that is generated by the LLM 230 based on LLM prompt 228 as input. Based on the output 231, the response generator subsystem 250 generates a response 209 to the query 201and transmits the response 209 to the requesting computing device 210. In some implementations, the response 209 includes the output 231 verbatim. However, FIG. 2 uses a different numeral for response 209 as compared to the output 231 to indicate that some implementations of the query answering system 221 perform additional processing on the output 231, such as processing that involves modifying the output 231 to further include annotations (e.g., the annotation 208) identifying the data source(s) for the synthetic chunk(s) provided to the LLM in the LLM prompt 228. In this example, the response 209 may include an explanation of the annotation 208 that reads "this information was extracted from original source table A." In other implementations, the query answering system 221 generates the response 209 by modifying the output 231 in other ways, such as by extracting, summarizing, changing a writing style/tone, or performing some other operation on the output 231.

In some implementations, the LLM 230 includes annotations (e.g., an annotation 208) in the output 231 and the response 209 includes an explanation that is based on the annotations 208. For example, the annotation 208 associates a synthetic chunk 207 that is a simplified table to a source portion expanded table from which the simplified table was derived. In this example, the response 209 may include an explanation of the annotation 208 that reads "this information was extracted from original source table A." In some implementations, the LLM prompt 228 includes instructions instructing the LLM 230 to include annotations associated with synthetic chunks (e.g., annotation 208) when content from synthetic chunks are included in the output 231. In some scenarios, the query answering system 221 looks up the annotations in a reference database and determines, from the reference database, one or more of a process (e.g., translation, tabulation, summarization, etc.) or tool (e.g., a translator tool, a summarization machine learning model, etc.) used to generate the synthetic chunk from a source portion. The query answering system 221 then identifies the process or tool in the response 209 that is provided back to the requesting resource 210 (e.g., the end user). For example, the response 209 informs the user that the LLM output was generated based on "derived information" (e.g., a synthetic chunk) and includes an annotation that cites (1) a source document that the synthetic chunk 207 was derived from and that allow includes (2) a description of a tool or process used to perform the chunk derivation. The inclusion of this information in the response 209 helps to improve user transparency in the overall process and provide the user with a basis for exercising independent judgement in trusting (or not trusting) accuracy of each individual LLM result.

In some implementations, the query answering system 221 provides the end user with options that allow the user to configure "chunk selection preferences" that, for example, cause the LLM prompt generator 245 to selectively exclude and/or give preferential treatment to synthetic chunks derived using certain types of processes or tools. For example, the user may set a preference that causes the LLM prompt generator 245 to exclude (e.g., never select) synthetic chunks that are created by a translation process that the user has, for any reason, decided is not reliable. Alternatively, some implementations may allow the user to designate preference for selecting chunks created by certain designated (preferred) processes or tools over others.

In some implementations where the response 209 includes annotations 208 to source material, the response 209 may include link(s) to the source material.

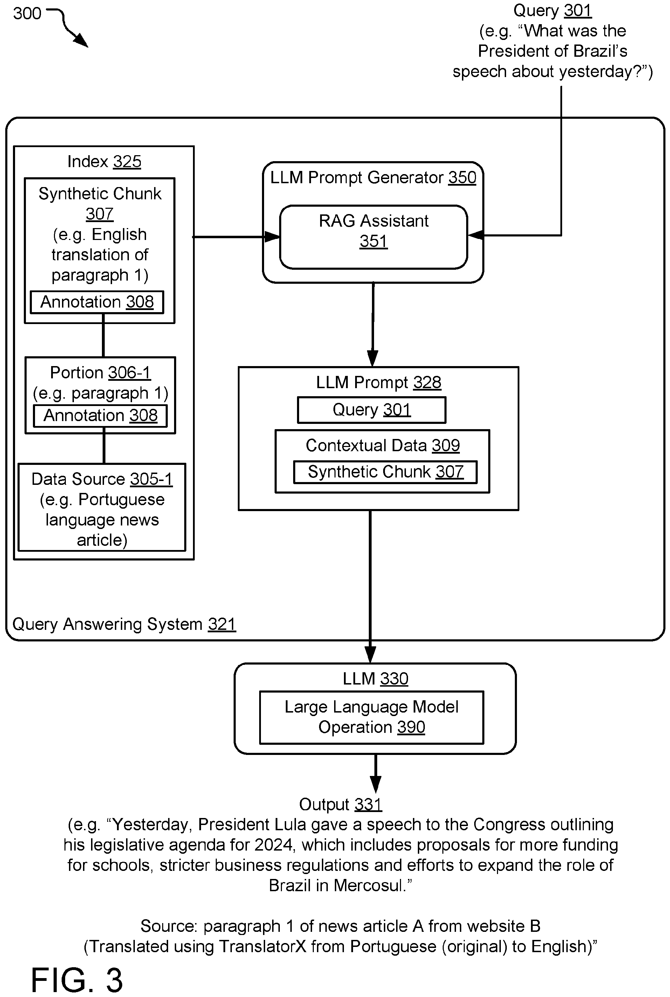

FIG. 3 illustrates an example computing environment 300 for generating, a LLM prompt 328 for input to an LLM 330 and an output 331 of the LLM 330 generated based on the LLM prompt 328. The example computing environment 300 includes a query answering system 321 and an LLM 330 that communicate via a network. Within the computing environment 300, the general functionality of the query answering system 321 and LLM 330 is the same or similar to that described with respect to like-named components of other figures herein.

FIG. 3 illustrates a specific example in which a query 301 input to the query answering system 321 comprises the phrase "What was the Brazilian President's speech about yesterday?" In response to receiving the query 301, the query answering system 321 searches an index 325 for contextual information that is relevant to the query 301 and, upon identification of such information, constructs an LLM prompt that includes the contextual information along with the query 301. Population of the index 325 is performed in a manner the same or similar to that described above with respect to FIGs. 1 and 2.

In the example depicted in FIG. 3, the index 325 is shown to include data source 305-1, which is a Portuguese language news article, for example, an article that discusses a speech made by the President of Brazil. The index 325 further includes a portion 306-1, which is a first paragraph of the Portuguese language news article. When initially populating the index 325 with data sources and portions of data sources, the query answering system 321 also generates, from the portions of the data sources, one or more synthetic chunks (e.g., synthetic chunk 307) that include data derived from one or more portions of the data sources.

In various implementations, the query answering system 321 performs different types of operations on one or more portions to generate synthetic chunks (e.g., the synthetic chunk 307). For example, the operations could include one or more of an assembly of a table, a rewrite of a table into paragraph, word, or sentence form, an extension of a table, a reformulation of a style of content, a summarization of a table, a summarization of content, a translation of content, or other operation with respect to one or more portions of content. In the example depicted in FIG. 3, the query answering system 321 performs a translation operation on portion 306-1, which is paragraph 1 of the Portuguese language news article, to generate synthetic chunk 307, which is an English translation of paragraph 1.

In one implementation, the index populator 240 parses each data portion residing in the index 225 to identify content satisfying predefined "synthetic chunk generation rules" that trigger invocation of certain processes or tools to generate synthetic chunks. The synthetic chunk generation rules can be statically imposed (e.g., set upon initial configuration and applied to all future ingestion updates to the index 225) and/or dynamically tuned, such as based on characteristics of the LLM 230 in a given implementation and/or characteristics of the data sources 205 that are being ingested into the index 225. For example, the synthetic chunk creator 243 may include a user interface that allows a system operator to select certain process, tools and/or corresponding rules for invoking the processes or tools during a data ingestion operation, and the operator may selectively tune these preferences for each separate ingestion process based on the type of documents being processed and/or known characteristics of the LLM model that is to receive prompts within contextual data populated from the index 225.

If, for example, the system operator is configuring the index 225 for use with an LLM that is primarily trained using English-version texts, the operator may define or select a rule that provides for automatically translating all non-English data portions to English. Alternatively, if the operator is readying the synthetic chunk creator 243 to process a corpus of scientific texts, the operator may select an option that causes the synthetic chunk creator 243 to automatically identify tables and, in response to identifying each table, process the table and surrounding text (of predefined length) with a synthetic chunk generation tool configured to rewrite each table in text form. In other implementations, the synthetic chunk creator 243 is configured to apply static rules. For example, one rule may provide for executing a text "summarization" tool to create a synthetic chunk that summarizes each 10 pages of text for data portions that satisfy predefined criteria. Another static rule may provide for creating a synthetic chunk representing each textbook chapter that includes equations, with the equations re-written in text form.

In some implementations, the query answering system 321 generates annotations 308 that associate portions with original data sources from which the portions were generated. These annotations 308 are propagated into the synthetic chunks such that each of the synthetic chunks includes a set of the annotations 308 identifying which of the portions were used to derive the synthetic chunk 307. In the example depicted in FIG. 3, the synthetic chunk 307 is an English translation of portion 306-1 (paragraph 1 of Portuguese language news article) and includes an annotation 308 that associates synthetic chunk 307 with portion 306-1. In the example depicted in FIG. 3, the portion 306-1 (paragraph 1 of Portuguese language news article) was generated from data source 305-1 (the Portuguese language news article) and includes an annotation 308 that associates the portion 306-1 with the data source 305-1.

The query answering system 321 includes an LLM prompt generator 350 that generates an LLM prompt 328 (e.g., an LLM prompt) based on the query 301. The LLM prompt 338 includes the query 301 and additionally includes contextual data 309 that is selected from the index 325 and added to the LLM prompt 338 by a retrieval augmented generation (RAG) assistant 351. In the example of FIG. 3, the contextual data 309 is shown to include at least the synthetic chunk 307 and may, in some implementations include data portions (e.g., verbatim excerpts of original source content) pulled from the index 325 and/or other synthetic chunks residing within the index 325 and derived from source content residing in the index 325.

In FIG. 3, the RAG assistant 351 is shown as being a subcomponent of the RAG assistant 351 but is, in other implementations, a software component managed by a third-party system. The RAG assistant 351 includes an application programming interface (API) for accessing the index 325 and implements logic to identify data chunks (e.g., original excerpts of source content and/or synthetic chunks, such as the synthetic chunk 307) from the index 325 that are relevant to the query 301. As RAG assistants are well-known in the art, the particular logic employed to select the contextual data 309 for inclusion within each LLM prompt is considered to be within the level of skill in the art and external to the scope of this disclosure.

The query answering system 321 transmits the LLM prompt 328 to the LLM 330. In the example depicted in FIG. 3, the LLM prompt 328 includes the synthetic chunk 307 (English translation of paragraph 1 of original Portuguese language news article) and the annotation 308 that associates the synthetic chunk 307 with its source portion (e.g., portion 306-1).

The LLM 330 receives the LLM prompt 328, processes the LLM prompt 328, and generates an output 331 in response -In the example depicted in FIG. 3, the output 331 of the LLM 330 includes text from synthetic chunk 307 (English translation of paragraph 1 of Portuguese language news article) that was included in the LLM prompt 328. For example, the output 331 of the example of FIG. 3 reads "Yesterday, President Lula gave a speech to the Congress outlining his legislative agenda for 2024, which includes proposals for more funding for schools, stricter business regulations and efforts to expand the role of Brazil in Mercosul."

The example output 331in FIG. 3 also includes the annotation 308 that was included in the LLM prompt 328 input to the LLM. The output 331 indicates this annotation 308 by reading 'Source: paragraph 1 of news article A from website B," where A is the title of the article and B is the name of the news website from which the article originated. In this way, the annotation 308 associates the synthetic chunk 307 with its source portion (e.g., portion 306-1). Further, the annotation 308 in the example output 331 of FIG. 3 includes an indication of the translation process used to generate synthetic chunk 307 from portion 306-1. For example, output 331 reads "Translated using TranslatorX from Portuguese (original) to English," indicating that the query answering system 321 used an application TranslatorX to perform a Portuguese-to-English translation operation on the portion 306-1 to generate the synthetic chunk 307.

The LLM 330 transmits the output 331 to the query answering system 321 and the query answering system 321 returns the output 331 and/or other information based on the output 331 the source of the query 301.

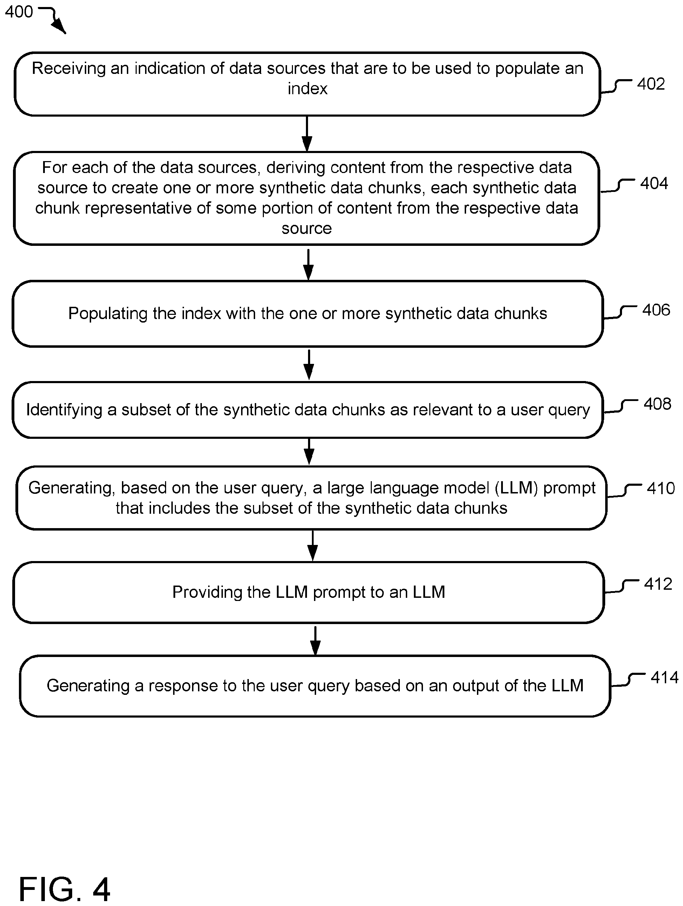

FIG. 4 depicts an example operations 400 for using an LLM and a retrieval augmented generation (RAG) assistant to respond to a query. The example operations 400 are, in some implementations, performed by a query answering system with characteristics the same or similar as the query answering systems described herein with respect to FIG. 1-3. In some implementations the query answering system includes a RAG assistant that selects contextual data from an index to include in the LLM prompt.

Example operation 402 involves receiving an indication of data sources that are to be used to populate an index. The collection of data sources can include one or more of website data, news articles, statistical data, dictionary data, encyclopedic data, blog data, or other text data. In some instances, the collection of data sources is indicated by a user and determining the collection of data sources can include accessing data that is indicated by the user. For example, the user selects one or more files stored on a data storage unit of the user computing device, on a remote server, or on another memory, and the example operation 402 involves receiving or otherwise accessing the selected one or more stored files. For example, the user selects files representing three-chapter books written by a common author. In some implementations, the operation 402 involves storing the collection of data sources in a data storage unit or other memory accessible to the query answering system. In some implementations the collection of data sources is stored on one or more data source systems separate from but accessible to the query answering system and the query answering system accesses the data sources from the one or more data source systems.

Example operation 404 involves generating, for each of the data sources, one or more synthetic chunks that include content derived from respective data source(s) of the collection of data sources. Each synthetic chunk is representative of some portion of content from one or more respective data source of the collection of data sources. The query answering system generates, from portions of the data sources, one or more synthetic chunks that can be stored in an index. Synthetic chunks include data derived from one or more portions of data sources.

Example operation 406 involves populating the index with the one or more synthetic chunks. In some implementations, query answering system stores the populated index in a data storage unit or other memory communicatively coupled to and accessible by the query answering system.

Example operation 408 involves identifying a subset of the synthetic chunks as relevant to a user query. The user query can be a natural language text query generated by an end user. In some implementations, example operation 408 is performed by a RAG assistant of the query answering system. In some implementations, the operation 408 includes applying one or more algorithms to determine a similarity between synthetic chunks in the index and the query. In some implementations, the operation 408 includes selecting a subset of the synthetic chunks having a greatest determined similarity or a subset of the synthetic chunks having a determined similarity above a threshold similarity.

Example operation 410 involves generating, by the RAG assistant and based on the user query, an LLM prompt that includes the subset of the synthetic chunks in addition to the user query. In one implementation, the format for the LLM is "Use <placeholder for synthetic chunk(s) and/or portions> to answer <user query>." If, for example, the user query is: "in 100 words, create a summary of [Y]," the LLM prompt may assume a form similar to "Use [A], [B], and [C] to answer 'in 100 words, create a 100-word summary of [Y]‴, where [A], [B], and [C] are synthetic chunks and are also included LLM prompt. In some cases, the LLM prompt includes one or more synthetic chunks in addition to non-synthetic chunks (e.g., data portions extracted verbatim from original source material).

Example operation 412 involves providing the LLM prompt to an LLM.

Example operation 414 involves receiving an output from the LLM and returning a response to the user query that is based on an output of the LLM. In some implementations, the operation 414 passes the output from the LLM back to the user verbatim. In other implementations, the operations 414 includes appending the LLM output with one or more annotations identifying source material for the synthetic chunk(s) included in the LLM prompt.

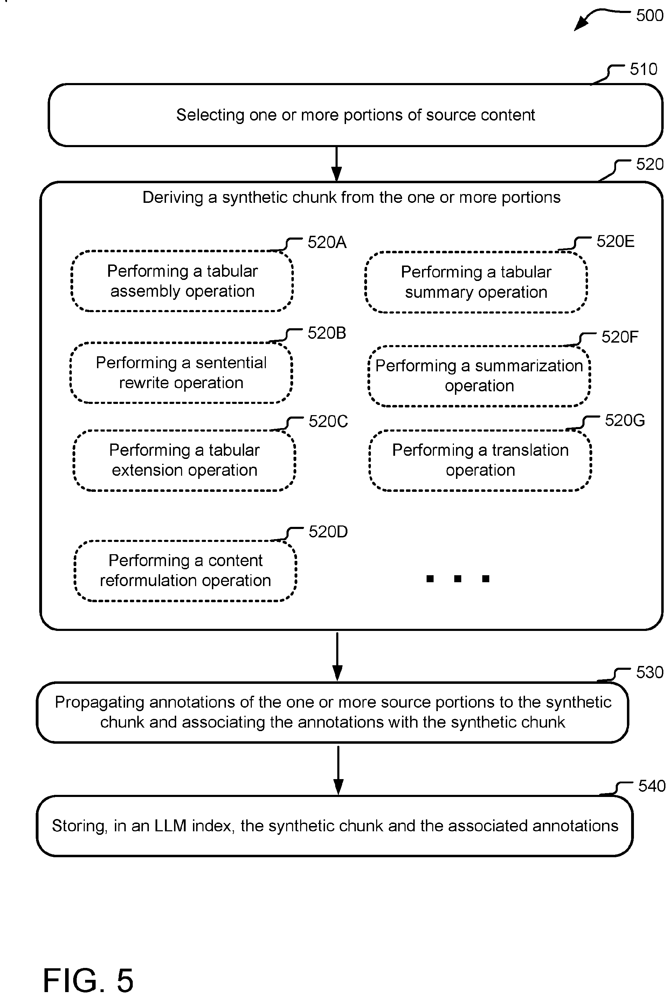

FIG. 5 depicts an example method 500 for populating an index used for generating an LLM prompt for an LLM with a synthetic chunk derived from one or multiple portions (e.g., excerpts) of source content. The example method 500 includes example operations 510, 520, 530, and 540. The example method 500 can be performed, in some implementations, by a query answering system such as any of the described with respect to FIG. 1-3.

Example operation 510 involves selecting one or more portions of source content. The source content can include one or more of website data, news articles, statistical data, dictionary data, encyclopedic data, blog data, or other text data.

Example operation 520 involves deriving a synthetic chunk from the one or more portions. In some implementations, deriving the synthetic chunk involves performing one or more operations on the one or more portions to generate the synthetic chunk.

Within FIG. 5, the operation 520 depicts example suboperations for generating a synthetic chunk from one or more portions. The example suboperations include suboperation 520A, suboperation 520B, suboperation 520C, suboperation 520D, suboperation 520E, and suboperation 520F. These suboperations can be performed alone, in combination, or in combination with other operations not explicitly described herein to generate a synthetic chunk from one or more portions in addition to the examples depicted in the example suboperations (e.g., suboperation 520A, suboperation 520B, suboperation 520C, suboperation 520D, suboperation 520E, suboperation 520F, and suboperation 520G). Various other suboperations not shown in FIG. 5 make likewise be performed in lieu of those shown to derive the synthetic chunk.

Example suboperation 520A involves performing a tabular assembly operation. For example, the tabular assembly operation involves reassembling, into a single table, tabular data of one or more source portions that is formatted in two or more pages (e.g., due to spanning a page break). In some scenarios, the LLM may have been trained on tabular data that does not include page breaks or other section breaks. Accordingly, including a synthetic chunk in an LLM prompt improves an output of the LLM because the synthetic chunk includes tabular data in a format that more closely resembles a format upon which the LLM was trained. Consequently, the inclusion of the synthetic chunk within the LLM prompt improves the quality of inferences that the LLM is able to generate. In some instances, reassembling the tabular data that is formatted (in the original source content) into two or more pages into a single table (in the synthetic chunk) that reduces a size of the data. For example, a size of data representing the single table is smaller than a size of the source content from which the single table was assembled. This reduces LLM memory usage and network bandwidth consumed by LLM prompts.

Example suboperation 520B involves performing a sentential rewrite operation. For example, the sentential rewrite operation involves rewriting tabular data of one or more source portions into sentence form. For example, a table in a source portion includes rows representing cities (e.g., Chicago, Miami, San Francisco) and a column representing crime rates (e.g., A, B, C crime rates) and rewrites the table to recite "Chicago has crime rate A. Miami has crime rate B. San Francisco has crime rate C." Since LLMs are trained to read and process text data in sentence form, the LLM may be able to make more meaningful inferences from tabular data translated into sentence form as compared to tabular data in its original form. For this reason, an LLM prompt that includes a synthetic chunk (e.g., generated by the suboperation 520B) may provide more valuable context for answering a query than the corresponding original source portions.

Example suboperation 520C involves performing a tabular expansion operation. For example, the tabular expansion operation involves expanding (e.g., extending) a table of one or more source portions to make explicit certain information that is implicit in the original table. For example, a timetable which states that 'between 10am and 1pm every 20 minutes' can be extended to make each of the 20-minute occurrences explicit. For example, based on the timetable, the tabular expansion operation generates a table that includes rows representing each five-minute interval starting at 10:00 a.m. and ending at 11:00 p.m. A person reading the timetable would know that a train departs at every hour, 20 minutes past the hour, and 40 minutes past the hour between 10:00 a.m. and 11:00 p.m. and that if the person arrives between two departures (e.g., the person arrives at 3:30 p.m.), the person would take the next available departure (e.g., the departure at 40 minutes past the same hour, at 3:40 p.m.). However, in this example, the LLM is incapable of performing this inference process even given the data portion as part of its prompt because the data portion does not explicitly state that "a train departs station A toward station B at 3:40 p.m. Accordingly, including a synthetic chunk derived by performing the suboperation 520C in LLM prompt improves an output of the LLM over an equivalent LLM prompt that uses the original source portion because the synthetic chunk provides explicit contextual data 309 that reduces a number of inference steps (or eliminates inference steps) that the LLM needs to perform to determine an accurate output using the original source portion.

Example suboperation 520D involves performing a content reformulation operation. For example, the content reformulation operation involves rewriting the content of the source portions (e.g., sentence by sentence, paragraph by paragraph, or word by word) so that the language of the document is more similar to language upon which the LLM was trained. Accordingly, including a synthetic chunk in a LLM prompt derived by performing the suboperation 520D improves an output of the LLM because the synthetic chunk includes language upon which the LLM was trained, which increases a probability that the LLM prompt is effectively interpreted by the LLM.

Example suboperation 520E involves performing a tabular summary operation. For example, the tabular summary operation involves generating a simplified projection of a table from source portions containing key (e.g., relevant, important) information but removing detailed information. For example, the tabular summary operation involves applying one or more algorithms to the table to identify the key information in the table, extracting the key information, and generating a new table including the key information. For example, a 50-row table in the source portion includes 5 columns and 2 columns are determined to include key variables, while 3 columns are determined not to include key variables. In this example, performing the tabular summary operation involves generating the same 50-row table but with only the 2 columns that include key variables. The tabular summary operation, by reducing the size of the source table, generates a synthetic chunk that is smaller in size than the original source table. Therefore, an LLM prompt including the summarized table can fit a large quantity additional contextual data than a similar LLM prompt that includes the source table. Due to input query size limits of the LLM, the increased additional contextual data capacity realized in this scenario can allow the LLM to be provided with richer contextual information than in a similar conventional scenario (e.g., where synthetic data chunks are not used), allowing the LLM to generates a superior output.

Example suboperation 520F involves performing a summarization process. For example, the summarization process involves generating a summary of a source text. The summary is shorter in length than the source text. For example, the source portion includes a 30-paragraph chapter of a book and the summary is a one paragraph summary of the chapter. The summarization process, by reducing the size of the source text via summarization, generates a synthetic chunk that is smaller in size than the original source text. Therefore, an LLM prompt including the synthetic chunk (e.g., the one paragraph summary of the chapter of a book) can fit a large quantity additional contextual data than a similar LLM prompt that includes the source text (e.g., the entire chapter of the book). In some scenarios, the increased additional contextual data capacity in the LLM prompt that use of this synthetic chunk affords in view of LLM prompt size constraints of the LLM provides a superior output of the LLM in view of a similar conventional LLM prompt using the entire chapter that is unable to include as much additional contextual data.

Example suboperation 520G involves performing a translation operation. For example, the translation operation involves translating all or part of one or more source portions that are in a particular language into one or more additional languages. In one implementation, the derivation operation 520 includes processing various data portions with a tool configured to automatically detect language and invoke certain synthetic chunk generation processes in response to detecting language and/or other characteristics of the data portions that satisfy set criteria. An operator configures the tool by defining conditions that, when satisfied, invoke certain synthetic chunk generation processes. For example, an operator may define one or more translation rules based on their independent knowledge of the LLM and/or the LLM's training dataset. If, for example, the operator knows that the LLM lacks an adequately-sized training corpus of French-language documents, the operator may define a rule that provides for translating all French-language documents into English or other language representing a sizable portion of the LLM's training corpus. In these scenarios, the translation of the French-language data portions improves an accuracy of interpretation by the LLM of the contextual data of the LLM prompt.

In some implementations, the example operation 520 for deriving a synthetic chunk from one or more source chunks includes generating a synthetic chunk that specifies a causal relationship between multiple events. For example, information regarding events in a causal chain A-B-C (A caused B, which caused C) are located in different source portions and the example operation 520 can include generating a synthetic chunk that specifies this causal relationship that "A causes B and B causes C." In some scenarios, an LLM may not be able to determine an answer to "what caused C?" without any causal relationship information being included in any of the source portions. Generating the synthetic chunk that states the causal relationship enables an LLM prompt to be generated that specifies the causal relationship for the LLM to generate an answer that is responsive to the query. However, a conventional LLM prompt that does not include the causal relationship information in the LLM prompt would not enable the LLM to provide an adequate answer.

Example operation 530 involves propagating annotations of the source portions used to derive the synthetic chunk to the synthetic chunk and associating the annotations with the synthetic chunk. For example, each of the source portions is generated from original data sources and each of the source portions includes an annotation to its original data source. In some instances, propagating the annotation(s) additionally or alternatively involves creating a data structure that associates each synthetic chunk with the corresponding annotation(s) to the source portions used to derive the synthetic chunk (e.g., a table, a database, a hierarchy, or other structure). In some scenarios, the data structure associates each synthetic chunk with the corresponding annotation(s) to the source portions used to derive the synthetic chunk and also associates each of the source portions to correspond annotation(s) to an original data source.

Example operation 540 involves storing, in an index, the synthetic chunk and the associated annotation. In certain implementations, the synthetic chunk and its annotation to the source portions are stored in a data storage unit or other memory accessible to the query answering system.

FIG. 6 illustrates an example computing device 600 for use in implementing the described technology. The computing device 600 may be a client computing device (such as a laptop computer, a desktop computer, or a tablet computer), a server/cloud computing device, an Internet-of-Things (IoT), any other type of computing device, or a combination of these options. The computing device 600 includes one or more hardware processor(s) 602 and a memory 604. The memory 604 generally includes both volatile memory (e.g., RAM) and nonvolatile memory (e.g., flash memory), although one or the other type of memory may be omitted. An operating system 610 resides in the memory 604 and is executed by the processor(s) 602. In some implementations, the computing device 600 includes and/or is communicatively coupled to storage 620.

In the example computing device 600, as shown in FIG. 6, one or more software modules, segments, and/or processors, such as applications 650, a query answering system (and one or more subsystems thereof), an LLM, a transformer, linear projection layers, position embedders, spectral layers, spectral processors, attention layers, attention processors, attention layers, attention networks, processing modules, classifier heads, layer normalizers, multi-layer perceptrons, multi-head self-attention layers, convolutional operators, spectral gating networks, embedding processors, output interfaces, and other program code and modules are loaded into the operating system 610 on the memory 604 and/or the storage 620 and executed by the processor(s) 602. The storage 620 may store an input dataset, a dataset of identified features, embedding spaces, chunks, weights, and other data and be local to the computing device 600 or may be remote and communicatively connected to the computing device 600. In particular, in one implementation, components of a system for classifying a dataset may be implemented entirely in hardware or in a combination of hardware circuitry and software.

The computing device 600 includes a power supply 616, which may include or be connected to one or more batteries or other power sources, and which provides power to other components of the computing device 600. The power supply 616 may also be connected to an external power source that overrides or recharges the built-in batteries or other power sources.

The computing device 600 may include one or more communication transceivers 630, which may be connected to one or more antenna(s) 632 to provide network connectivity (e.g., mobile phone network, Wi-Fi^{®}, Bluetooth^{®}) to one or more other servers, client devices, IoT devices, and other computing and communications devices. The computing device 600 may further include a communications interface 636 (such as a network adapter or an I/O port, which are types of communication devices). The computing device 600 may use the adapter and any other types of communication devices for establishing connections over a wide-area network (WAN) or local-area network (LAN). It should be appreciated that the network connections shown are exemplary and that other communications devices and means for establishing a communications link between the computing device 600 and other devices may be used.

The computing device 600 may include one or more input devices 634 such that a user may enter commands and information (e.g., a keyboard, trackpad, or mouse). These and other input devices may be coupled to the server by one or more interfaces 638, such as a serial port interface, parallel port, or universal serial bus (USB). The computing device 600 may further include a display 622, such as a touchscreen display.

The computing device 600 may include a variety of tangible processor-readable storage media and intangible processor-readable communication signals. Tangible processor-readable storage can be embodied by any available media that can be accessed by the computing device 600 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 600. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

In some aspects, the techniques described herein relate to a method including: deriving content from a collection of data sources to create synthetic chunks, each synthetic chunk representative of a respective portion of content present in a subset of data sources of the collection of data sources; populating an index with the synthetic chunks; identifying a subset of the synthetic chunks within the index as relevant to a query; generating a large language model (LLM) prompt that includes the subset of the synthetic chunks from the index and the query; providing the LLM prompt to an LLM; and generating a response to the query based on output of the LLM.

In some aspects, the techniques described herein relate to a method, wherein deriving the content from the collection of data sources includes changing content of a data source or changing a format of the data source.

In some aspects, the techniques described herein relate to a method, further including: generating, for a synthetic chunk of the synthetic chunks, a respective annotation that associates the synthetic chunk with the respective portion of the content, the response including the respective annotation.

In some aspects, the techniques described herein relate to a method, further including generating an explanation for a first synthetic chunk of the synthetic chunks, the explanation describing a derivation of the first synthetic chunk from the respective portion of the content, wherein the response includes the explanation.

In some aspects, the techniques described herein relate to a method, wherein a select synthetic chunk of the synthetic chunks is representative of a table and deriving the content includes expanding a table within a data source of the collection of data sources to create an expanded table, wherein expanding the table includes adding one or more columns or rows storing information that is not explicit but implied by formatting of the table.

In some aspects, the techniques described herein relate to a method, wherein a select synthetic chunk of the synthetic chunks is a translation of a text from a data source of the collection of data sources and deriving the content includes at least performing a translation of the text from a first language to a second language.

In some aspects, the techniques described herein relate to a method, wherein a select synthetic chunk of the synthetic chunks is a summarization of a text from a data source of the collection of data sources and deriving the content includes at least summarizing the text.

In some aspects, the techniques described herein relate to a method, wherein deriving the content to create the synthetic chunks further includes generating, for each synthetic chunk of the synthetic chunks, a respective confidence value indicating a degree of confidence that the synthetic chunk has been accurately derived from the respective portion of content present in the subset of data sources.

In some aspects, the techniques described herein relate to a method, further including: modifying the subset of synthetic chunks to exclude one or more of the synthetic chunks for which the respective confidence value is below a threshold.

In some aspects, the techniques described herein relate to a method, wherein the response includes a reference to a particular data source associated with a select synthetic chunk of the subset of the synthetic chunks.

In some aspects, the techniques described herein relate to a system including: one or more hardware processors; a query answering system executable by one or more hardware processors and configured to perform operations including: deriving content from a collection of data sources to create synthetic chunks, each synthetic chunk representative of a respective portion of content present in a subset of data sources of the collection of data sources; populating an index with the synthetic chunks; identifying, by a retrieval augmented generation (RAG) assistant, a subset of the synthetic chunks within the index as relevant to a query; generating, by the RAG assistant, a large language model (LLM) prompt that includes the subset of the synthetic chunks from the index and the query; providing the LLM prompt to an LLM; and generate a response to the query based on an output of the LLM.

In some aspects, the techniques described herein relate to a system, wherein the query answering system is further configured to perform operations including: generating, for each synthetic chunk of the synthetic chunks, a respective annotation that associates the synthetic chunk with the respective portion of content, the response including the respective annotation.

In some aspects, the techniques described herein relate to a system, wherein the query answering system is further configured to generate an explanation for a first synthetic chunk of the synthetic chunks, the explanation describing a derivation of the first synthetic chunk from the respective portion of content present in the subset of data sources, wherein the response includes the explanation.

In some aspects, the techniques described herein relate to a system, wherein a select synthetic chunk of the synthetic chunks is representative of a table and deriving the content includes expanding a table within a data source of the collection of data sources to create an expanded table, wherein expanding the table includes adding one or more columns or rows storing information that is not explicit but implied by formatting of the table.

In some aspects, the techniques described herein relate to a system, wherein deriving the content from the collection of data sources to create a select data chunk of the synthetic chunks includes translating a text from a first language to a second language.

In some aspects, the techniques described herein relate to a system, wherein deriving the content from the collection of data sources to create a select synthetic chunk of the synthetic chunks includes summarizing text in a data source and the select data chunk includes a summary of the text.

In some aspects, the techniques described herein relate to a system, wherein deriving the content to create the synthetic chunks further includes generating, for each synthetic chunk of the synthetic chunks, a respective confidence value indicating a degree of confidence that the synthetic chunk has been accurately derived from the respective portion of content present in the subset of data sources and the query answering system is further configured to: modify the subset of synthetic chunks to exclude one or more of the synthetic data chunks for which the respective confidence value is below a threshold.

In some aspects, the techniques described herein relate to a system, wherein the response includes a user interface object referencing a particular data source associated with a particular data chunk of the subset of the synthetic chunks, wherein the query answering system is further configured to perform operations including displaying, via a user interface, the user interface object.

In some aspects, the techniques described herein relate to one or more tangible processor-readable storage media embodied with instructions for executing on one or more processors and circuits of a computing device a process for classifying an input dataset, the process including: identifying a subset of synthetic chunks in an index as relevant to a user query, the synthetic chunks each including content derived from one or more data sources in a collection; generating a large language model (LLM) prompt that includes the subset of the synthetic chunks from the index and the user query; providing the LLM prompt to an LLM; and generating a response to the user query based on output of the LLM.

In some aspects, the techniques described herein relate to one or more tangible processor-readable storage media, the process further including generating, for each synthetic chunk of the synthetic chunks, a respective annotation that associates the synthetic chunk with the respective portion of content present in the subset of data sources, the response including the respective annotation.

In some implementations a query answering system may access a collection of data sources to populate an index. A query answering system derives content from a collection of data sources to create synthetic chunks that are each representative of a portion of content from one or more of the data sources. A query answering system populates the index with the synthetic chunks. A query answering system identifies a subset of the synthetic chunks as relevant to a user query, generates a large language model (LLM) prompt that includes the subset of the synthetic chunks from the index and the user query, provides the LLM prompt to an LLM., and generates a response to the user query based on output of the LLM.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

## Claims

1. A method (500) comprising:
deriving content from a collection of data sources (105; 205) to create synthetic chunks, each synthetic chunk (107; 207; 307) representative of a respective portion (206-1, 206-n; 306-1) of content present in a subset of data sources (105; 205) of the collection of data sources (105; 205);
populating an index (125; 225; 325) with the synthetic chunks;
identifying a subset of the synthetic chunks within the index (125; 225; 325) as relevant to a query (101; 201; 301);
generating a large language model, LLM, (130; 230; 330) prompt that includes the subset of the synthetic chunks from the index (125; 225; 325) and the query (101; 201; 301);
providing the LLM (130; 230 330) prompt (128; 228; 338) to an LLM (130; 230 330); and
generating a response (109; 209) to the query (101; 201; 301) based on output (131; 231; 331) of the LLM (130; 230; 330).

2. The method of claim 1, wherein deriving the content from the collection of data sources comprises changing content of a data source or changing a format of the data source.

3. The method of claim 1 or claim 2, further comprising:
generating, for a synthetic chunk of the synthetic chunks, a respective annotation that associates the synthetic chunk with the respective portion of the content, the response comprising the respective annotation.

4. The method of any previous claim, further comprising:
generating an explanation for a first synthetic chunk of the synthetic chunks, the explanation describing a derivation of the first synthetic chunk from the respective portion of the content, wherein the response includes the explanation.

5. The method of any previous claim, wherein a select synthetic chunk of the synthetic chunks is at least one of:
representative of a table and deriving the content includes expanding a table within a data source of the collection of data sources to create an expanded table, wherein expanding the table includes adding one or more columns or rows storing information that is not explicit but implied by formatting of the table;
a translation of a text from a data source of the collection of data sources and deriving the content comprises at least performing a translation of the text from a first language to a second language; and
a summarization of a text from a data source of the collection of data sources and deriving the content comprises at least summarizing the text.

6. The method of any previous claim, wherein deriving the content to create the synthetic chunks further comprises generating, for each synthetic chunk of the synthetic chunks, a respective confidence value indicating a degree of confidence that the synthetic chunk has been accurately derived from the respective portion of content present in the subset of data sources.

7. The method of claim 6, further comprising:
modifying the subset of synthetic chunks to exclude one or more of the synthetic chunks for which the respective confidence value is below a threshold.

8. The method of any previous claim, wherein the response comprises a reference to a particular data source associated with a select synthetic chunk of the subset of the synthetic chunks.

9. A system comprising:
one or more hardware processors (602);
a query (101; 201; 301) answering system (121; 221; 321) executable by one or more hardware processors (602) and configured to perform operations (400; 510, 530 540) comprising:
deriving content from a collection of data sources (105; 205) to create synthetic chunks, each synthetic chunk (107; 207 307) representative of a respective portion (206-1, 206-n; 306-1) of content present in a subset of data sources (105; 205) of the collection of data sources (105; 205);
populating an index (125; 225; 325) with the synthetic chunks;
identifying, by a retrieval augmented generation, RAG, assistant, a subset of the synthetic chunks within the index (125; 225; 325) as relevant to a query (101; 201; 301);
generating, by the RAG assistant (351), a large language model, LLM, (130; 230 330) prompt that includes the subset of the synthetic chunks from the index (125; 225; 325) and the query (101; 201 301);
providing the LLM (13; 230 330) prompt (128; 228; 328, 338) to an LLM (130; 230 330); and
generate a response (109 209) to the query (101; 201; 301) based on an output (131; 231; 331) of the LLM (130; 230; 330).

10. The system of claim 9, wherein a select synthetic chunk of the synthetic chunks is representative of a table and deriving the content includes expanding a table within a data source of the collection of data sources to create an expanded table, wherein expanding the table includes adding one or more columns or rows storing information that is not explicit but implied by formatting of the table.

11. The system of claim 9 or claim 10, wherein deriving the content from the collection of data sources to create a select data chunk of the synthetic chunks comprises translating a text from a first language to a second language.

12. The system of any of claims 9 to 11, wherein deriving the content from the collection of data sources to create a select synthetic chunk of the synthetic chunks comprises summarizing text in a data source and the select data chunk comprises a summary of the text.

13. The system of any of claims 9 to 12, wherein deriving the content to create the synthetic chunks further comprises generating, for each synthetic chunk of the synthetic chunks, a respective confidence value indicating a degree of confidence that the synthetic chunk has been accurately derived from the respective portion of content present in the subset of data sources and the query answering system is further configured to:
modify the subset of synthetic chunks to exclude one or more of the synthetic data chunks for which the respective confidence value is below a threshold.

14. The system of any of claims 9 to 13, wherein the response comprises a user interface object referencing a particular data source associated with a particular data chunk of the subset of the synthetic chunks, wherein the query answering system is further configured to perform operations comprising displaying, via a user interface, the user interface object.

15. One or more tangible processor-readable storage (620) media embodied with instructions for executing on one or more processors (602) and circuits of a computing device (600) a process for classifying an input dataset, the process comprising:
identifying a subset of synthetic chunks in an index (125; 225; 325) as relevant to a user query (101; 201; 301), the synthetic chunks each comprising content derived from one or more data sources (105; 205) (105) in a collection;
generating a large language model, LLM, (130; 230; 330) prompt that includes the subset of the synthetic chunks from the index (125; 225; 325) and the user query (301) (201) (101);
providing the LLM (130; 230; 330) prompt (128; 228; 338) to an LLM (130; 230; 330); and
generating a response (109; 209) to the user query (101; 201; 301) based on output (131; 231; 331) of the LLM (130; 230; 330).
